(19) Europäisches Patentamt
European Patent Office
Office européen des brevets

(11) **EP 4 462 496 A1**

(12) **EUROPEAN PATENT APPLICATION**
published in accordance with Art. 153(4) EPC

(43) Date of publication:
**13.11.2024 Bulletin 2024/46**

(21) Application number: **23895531.4**

(22) Date of filing: **08.03.2023**

(51) International Patent Classification (IPC):
**H01M 4/13** (2010.01)      **H01M 4/139** (2010.01)
**H01M 10/0525** (2010.01)

(86) International application number:
**PCT/CN2023/080340**

(87) International publication number:
**WO 2024/183037 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central, Central And Western District (HK)**

(72) Inventors:
• **LI, Lianchuan
Ningde
Fujian 352100 (CN)**

• **SHEN, Rui
Ningde
Fujian 352100 (CN)**
• **HE, Libing
Ningde
Fujian 352100 (CN)**

(74) Representative: **Ran, Handong et al
Maucher Jenkins
Seventh Floor Offices
Artillery House
11-19 Artillery Row
London SW1P 1RT (GB)**

(54) **NEGATIVE ELECTRODE PLATE, METHOD FOR PREPARING SAME, BATTERY CELL, BATTERY, AND ELECTRIC APPARATUS**

(57)    This application provides a negative electrode plate and a preparation method thereof, a battery cell, a battery, and an electrical device. The negative electrode plate includes a current collector and a film layer disposed on the current collector. The film layer includes a first part and a second part disposed along a thickness direction of the film layer. The first part is disposed on the current collector. The second part is disposed on the first part. The first part includes a first active material. The second part includes a second active material. The first active material includes a first carbon-based material. The second active material includes a second carbon-based material containing a coating layer. A powder compaction density of the first active material is greater than a powder compaction density of the second active material. When applied to a battery, the negative electrode plate endows the battery with a high energy density and good cycle performance.

FIG. 1

## Description

This application relates to the technical field of batteries, and in particular, to a negative electrode plate, a method for preparing a negative electrode plate, a battery cell, a battery, and an electrical device.

## BACKGROUND

In recent years, batteries have been widely applied in energy storage power systems such as hydro, thermal, wind, and solar power stations, and in many other fields such as electric tools, electric bicycles, electric motorcycles, and electric vehicles, military equipment, and aerospace. The wide application of the batteries imposes higher requirements on the energy density, C-rate performance, and the like of the batteries.

Increasing the coating weight of an active material on a negative electrode plate is a method for increasing the energy density of a battery. However, with the increase of the coating weight of the active material, the thickness of the negative electrode plate increases, and an expansion effect of a negative active material layer intensifies during cycling of the battery, thereby making the active material layer more prone to collapse, and impairing ion kinetics severely. Therefore, how to endow a battery with good C-rate performance in addition to a high energy density is a pressing technical challenge.

## SUMMARY

This application is made in view of the above technical challenge. An objective of this application is to provide a negative electrode plate, a method for preparing a negative electrode plate, a battery cell, a battery, and an electrical device. The negative electrode plate is applied in a battery and endows the battery with a high energy density and good cycle performance.

According to a first aspect, this application provides a negative electrode plate. The negative electrode plate includes a current collector and a film layer disposed on the current collector. The film layer includes a first part and a second part disposed along a thickness direction of the film layer. The first part is disposed on the current collector. The second part is disposed on the first part. The first part includes a first active material. The second part includes a second active material. The first active material includes a first carbon-based material. The second active material includes a second carbon-based material containing a coating layer. A powder compaction density of the first active material is greater than a powder compaction density of the second active material.

In an embodiment of this application, on the one hand, the first active material is disposed in the first part. The first active material is of a higher compaction density than the second active material, and endows the battery with a relatively high energy density. On the other hand, a second active material is disposed in the second part. The second active material includes a second carbon-based material containing a coating layer, so that the second active material is of relatively good ion kinetics and alleviates battery polarization. In this way, the first active material disposed in the first part coordinates with the second active material disposed in the second part to endow the battery with good charge-discharge performance and cycle performance in addition to a high energy density.

In some embodiments, the powder compaction density $\rho_2$ of the second active material under a pressure of 50000 N satisfies: 1.50 g/cc $\leq \rho_2 \leq$ 2.00 g/cc, and optionally, 1.55 g/cc $\leq \rho_2 \leq$ 1.95 g/cc.

In some embodiments, a powder compaction density $\rho_{2-1}$ of the second carbon-based material under a pressure of 50000 N satisfies: 1.60 g/cc $\leq \rho_{2-1} \leq$ 1.95 g/cc, and optionally, 1.65 g/cc $\leq \rho_{2-1} \leq$ 1.80 g/cc.

In some embodiments, the second carbon-based material includes a primary particle.

In these embodiments of this application, the primary particle is introduced in the second carbon-based material. On the one hand, the second carbon-based material that assumes a primary particle morphology is simple to prepare and easy to obtain, and is of a relatively high degree of graphitization and a relatively high gravimetric capacity, thereby endowing the battery with a relatively high energy density. On the other hand, the second active material includes a second carbon-based material containing a coating layer, that is, includes primary particles containing a coating layer. The ion active sites on the surface of a primary particle containing a coating layer are increased in contrast to the active sites of a primary particle without a coating layer, thereby improving ion kinetics and the charge-discharge performance of the battery.

In some embodiments, the coating layer includes amorphous carbon.

In these embodiments of this application, the coating layer contains amorphous carbon, thereby improving the electrical conductivity of the second carbon-based material and increasing the number of ion active sites on the surface of the second carbon-based material, and in turn, further improving the ion kinetics of the second active material.

In some embodiments, the second carbon-based material satisfies at least one of the following conditions (1) to (3): (1) a specific surface area of the second carbon-based material is $SSA_2$, 1.0 m$^2$/g $<$ $SSA_2 \leq$ 3.0 m$^2$/g, and optionally, 1.3 m$^2$/g $< SSA_2 \leq$ 2.0 m$^2$/g; (2) a volume median diameter of the second carbon-based material is $Dv50_2$,

$6.0\ \mu m \le Dv50_2 \le 18.0\ \mu m$, and optionally, $8.0\ \mu m \le Dv50_2 \le 15.0\ \mu m$; or (3) a gravimetric specific capacity of the second carbon-based material is $C_{m2}$, $345\ mAh/g \le C_{m2} \le 360\ mAh/g$, and optionally, $348\ mAh/g \le C_{m2} \le 358\ mAh/g$.

In some embodiments, the powder compaction density pi of the first active material under a pressure of 50000 N satisfies: $1.70\ g/cc \le \rho_1 \le 2.05\ g/cc$, and optionally, $1.80\ g/cc \le \rho_1 \le 2.05\ g/cc$.

In these embodiments of this application, in a case that the first active material is disposed in the first part of the film layer and the second active material is disposed in the second part of the film layer, by controlling the powder compaction density of the first active material to fall within an appropriate range, the powder compaction density is caused to be relatively high on an inner side, close to the current collector, of the film layer, thereby endowing the battery with a high energy density.

In some embodiments, the powder compaction density pi-i of the first carbon-based material under a pressure of 50000 N satisfies: $1.80\ g/cc \le \rho_{1-1} \le 2.05\ g/cc$, and optionally, $1.90\ g/cc \le \rho_{1-1} \le 2.00\ g/cc$.

In these embodiments of this application, the powder compaction density of the first active material is increased by controlling the powder compaction density of the first carbon-based material to fall within an appropriate range, thereby increasing the powder compaction density of the inner side of the film layer, and endowing the battery with a high energy density.

In some embodiments, the first carbon-based material includes micro-oxidized artificial graphite.

In these embodiments of this application, the first carbon-based material includes micro-oxidized artificial graphite. Compared with ordinary artificial graphite, the micro-oxidized artificial graphite is characterized by a large specific surface area, stronger bonding between particles, and a high powder compaction density.

In some embodiments, the first carbon-based material includes a secondary particle.

In these embodiments of this application, the secondary particles introduced into the first carbon-based material improve the ion kinetics of the first carbon-based material, thereby improving the ion kinetics of the first active material disposed in the first part, and in turn, further improving the ion conductivity of the negative electrode plate and the charge-discharge performance of the battery. In addition, the bonding force between the secondary particles is relatively strong, and the cohesion within the negative electrode plate is relatively strong, thereby alleviating the expansion effect of the negative electrode plate during cycling of the battery and improving the cycle performance and service life of the battery.

In some embodiments, in the first carbon-based material, a number percentage n of the secondary particles satisfies: $70\% \le n \le 90\%$.

In some embodiments, the first carbon-based material satisfies at least one of the following conditions (4) to (6): (4) a specific surface area of the first carbon-based material is SSAi, $1.6\ m^2/g \le SSA_1 \le 3.5\ m^2/g$, and optionally, $1.8\ m^2/g \le SSA_1 \le 2.8\ m^2/g$; (5) a volume median diameter of the first carbon-based material is $Dv50_1$, $10.0\ \mu m \le Dv50_1 \le 30.0\ \mu m$, and optionally, $13.0\ \mu m \le Dv50_1 \le 25.0\ \mu m$; or (6) a gravimetric specific capacity of the first carbon-based material is $C_{m1}$, $350\ mAh/g \le C_{m1} \le 365\ mAh/g$, and optionally, $355\ mAh/g \le C_{m1} \le 362\ mAh/g$.

In some embodiments, the first active material further includes natural graphite.

In these embodiments of this application, the natural graphite introduced into the first active material increases the gravimetric capacity of the first active material and further increases the energy density of the battery.

In some embodiments, a ratio of a mass $m_2$ of the natural graphite to a mass mi of the first active material satisfies: $0\% < m_2/m_1 \le 50\%$.

In some embodiments, a ratio of a thickness hi of the first part to a thickness h of the film layer satisfies: $40\% \le hi/h \le 60\ \%$.

In some embodiments, a ratio of a thickness $h_2$ of the second part to a thickness h of the film layer satisfies: $40\% \le h_2/h \le 60\ \%$.

In these embodiments of this application, by controlling the percentage of the thickness hi of the first part and/or the thickness $h_2$ of the second part in the thickness h of the film layer, the energy density of the negative electrode plate can be flexibly adjusted according to the needs of different batteries, so that the negative electrode plate is adaptable to a wider range of batteries of different models.

According to a second aspect, a method for preparing a negative electrode plate is provided. The method includes: providing a current collector; preparing a first part of a film layer on the current collector, where the first part includes a first active material, and the first active material includes a first carbon-based material; preparing a second part of the film layer on the first part of the film layer. The second part includes a second active material. The second active material includes a second carbon-based material containing a coating layer. A powder compaction density of the first active material is greater than a powder compaction density of the second active material.

In an embodiment of this application, the film layer is prepared to include a first part containing a first active material and a second part containing a second active material. The first carbon-based material in the first active material possesses a relatively high compaction density, and can endow the battery with a relatively high energy density. The second carbon-based material in the second active material contains a coating layer, and endows the negative electrode plate with good ion kinetics. The negative electrode plate prepared by the above method not only makes the battery achieve a high energy density, but also endows the battery with good charge-discharge performance and cycle performance.

According to a third aspect, a battery cell is provided. The battery cell includes the negative electrode plate according to any one embodiment of the first aspect, or a negative electrode plate prepared by the method according to any one embodiment of the second aspect.

According to a fourth aspect, a battery is provided. The battery includes the battery cell according to any one embodiment of the third aspect.

According to a fifth aspect, an electrical device is provided. The electrical device includes the battery cell according to any one embodiment of the third aspect and/or the battery according to any one embodiment of the fourth aspect.

In this way, by designing appropriate materials of the film layer and different parts of the film layer of the negative electrode plate, this application not only makes the battery achieve a high energy density, but also endows the battery with good charge-discharge performance, cycle performance, and a long service life.

**BRIEF DESCRIPTION OF DRAWINGS**

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts. The drawings are not drawn to scale.

FIG. 1 is a schematic structural diagram of a negative electrode plate according to this application;
FIG. 2 is a schematic flowchart of a method for preparing a negative electrode plate according to this application;
FIG. 3 is a schematic diagram of a battery cell according to this application;
FIG. 4 is a schematic diagram of a battery module according to this application;
FIG. 5 is a schematic diagram of a battery according to this application; and
FIG. 6 is another schematic diagram of a battery according to this application.

**DETAILED DESCRIPTION OF EMBODIMENTS**

The following describes and discloses in detail a negative electrode plate, a method for preparing a negative electrode plate, a battery cell, a battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just abrief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise specified, the following terms have the following meanings. Any undefined terms have the technical meaning that is generally accepted.

Generally, a battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions. In some embodiments, the battery referred to herein is also known as a secondary battery.

In this application, using a lithium-ion battery as an example, the lithium-ion battery is a typical secondary battery. Because the lithium-ion battery is charged and discharged by virtue of chemical reactions of lithium ions deintercalated between a positive electrode and a negative electrode, the lithium-ion battery is also called a rocking chair battery. During charging of a lithium-ion battery, lithium ions are deintercalated from the positive electrode and moving and intercalated into the negative electrode; and, during discharging, the lithium ions are deintercalated from the negative electrode and moving and intercalated into the positive electrode.

Understandably, the terms "lithiation" and "intercalation" referred to herein mean a process by which the lithium ions are inserted into a positive electrode material or a negative electrode material due to electrochemical reactions. The terms "extracting", "delithiation", and "deintercalation" referred to herein mean a process by which the lithium ions are extracted from the positive electrode material or negative electrode material due to electrochemical reactions.

First, some of the technical terms used herein are described below.

"Carbon-based material" means a material that uses carbon as a matrix, and includes carbon-based composite material, fiber-reinforced composite material, graphite, graphene material, and the like.

"Micro-oxidizing" means a process of micro-oxidation reactions of a material placed in an oxidizing atmosphere at a temperature of 600 °C to 900 °C.

"Primary particle" means a particle obtained by directly crushing a raw material, and then performing shaping, graphitization, and other operations by using carbon as a matrix, and is also known as a carbon-based single particle.

"Secondary particle" means a particle formed by steps such as graphitization from particles agglomerated, granulated or otherwise generated from primary particles by using carbon as a matrix.

The increasingly wider application of batteries imposes higher requirements on the energy density of the batteries. By increasing a powder compaction density of a positive electrode plate or negative electrode plate, a larger amount of positive or negative active material can be carried per unit area or volume of the positive electrode plate or negative electrode plate, thereby increasing the energy density of the battery effectively. Using the negative electrode plate as an example, when the film layer of the negative electrode plate is thicker and the compaction density is higher, the energy density contributed by the negative electrode plate increases accordingly. However, the compaction density that a current collector can withstand is limited. In addition, a relatively thick film layer intensifies the expansion effect of the negative electrode plate during cycling of the battery, and makes the film layer more prone to collapse, thereby being detrimental to deintercalation and intercalation of active ions in the negative active material, and in turn, drastically impairing the ion kinetics of the battery, and resulting in inferior C-rate performance.

In view of this, an embodiment of this application provides a negative electrode plate. A film layer of the negative electrode plate includes a first part disposed on a negative current collector and a second part disposed on the first part. The first part includes a first active material. The second part includes a second active material. The first active material includes a first carbon-based material of a relatively high compaction density. The second active material includes a second carbon-based material containing a coating layer. By virtue of coordination between the first carbon-based material and the second carbon-based material, the negative electrode plate endows the battery with a high energy density, and also improves the charge-discharge performance and cycle performance of the battery.

Next, the negative electrode plate, positive electrode plate, separator, and other parts of the battery are described below in detail.

**[Negative electrode plate]**

A negative electrode plate typically includes a negative current collector and a negative electrode film layer disposed on at least one surface of the negative current collector. The negative electrode film layer includes a negative active material. Understandably, the negative electrode film layer is a film layer disposed on the negative current collector.

As an example, the negative current collector includes two surfaces opposite to each other in a thickness direction of the negative current collector. The negative electrode film layer is disposed on either or both of the two opposite surfaces of the negative current collector.

Optionally, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

Optionally, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

Optionally, the negative electrode film layer further includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

Optionally, in an embodiment, the negative electrode film layer further includes a conductive agent. The conductive agent may be at least one selected from superconductive carbon, acetylene black, carbon black, Ketjen black, carbon dots, carbon nanotubes, graphene, or carbon nanofibers.

Optionally, the negative electrode film layer further includes other agents, such as a thickener (for example, sodium carboxymethyl cellulose (CMC-Na)).

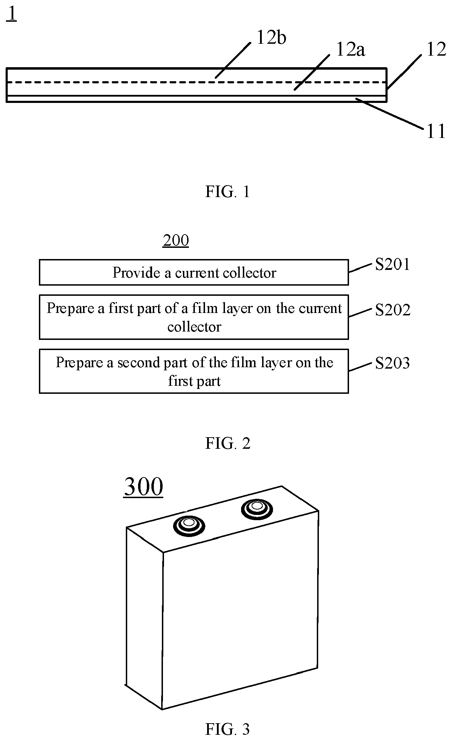

FIG. 1 is a schematic structural diagram of a negative electrode plate according to an embodiment of this application.

As shown in FIG. 1, a negative electrode plate 1 includes a negative current collector 11 and a film layer 12 disposed on the negative current collector 11.

The film layer 12 includes a first part 12a and a second part 12b. The first part 12a is disposed on the negative current collector 11. The second part 12b is disposed on the first part 12a.

The first part 12a includes a first active material. The first active material includes a first carbon-based material. The second part 12b includes a second active material. The second active material includes a second carbon-based material containing a coating layer. A powder compaction density of the first active material is greater than a powder compaction density of the second active material.

Specifically, the film layer 12 is the negative electrode film layer. In the negative electrode plate 1, the first active material is disposed in the first part 12a of the film layer 12, and the second active material is disposed in the second part 12b of the film layer 12. The powder compaction density of the first active material is greater than that of the second active material. In this way, the film layer 12 on an inner side, away from an electrolyte solution, of the negative electrode plate 1 is of a relatively high compaction density, and endows the battery with a relatively high energy density. The coating layer on the surface of the second carbon-based material provides a large number of active sites for electrochemical reactions of the battery, thereby improving the ion kinetics of the film layer 12 on an outer side, close to the electrolyte solution, of the negative electrode plate 1, and in turn, endowing the battery with good charge-discharge capabilities and high cycle performance.

Optionally, the powder compaction density $\rho_2$ of the second active material under a pressure of 50000 N satisfies: 1.50 g/cc $\leq \rho_2 \leq$ 2.00 g/cc, and optionally, 1.55 g/cc $\leq \rho_2 \leq$ 1.95 g/cc.

Specifically, $\rho_2$ may be 1.50 g/cc, 1.55 g/cc, 1.60 g/cc, 1.65 g/cc, 1.70 g/cc, 1.75 g/cc, 1.80 g/cc, 1.85 g/cc, 1.90 g/cc, 1.95 g/cc, 2.00 g/cc, or a value falling within a range formed by any two thereof.

Optionally, the powder compaction density $\rho_{2\text{-}1}$ of the second carbon-based material under a pressure of 50000 N satisfies: 1.60 g/cc $\leq \rho_{2\text{-}1} \leq$ 1.95 g/cc, and optionally, 1.65 g/cc $\leq \rho_{2\text{-}1} \leq$ 1.80 g/cc.

Optionally, the second carbon-based material includes a primary particle.

Specifically, the primary particle exhibits advantages such as a simple preparation method, high availability, a relatively high degree of graphitization, and a relatively high gravimetric capacity.

In this embodiment, the primary particle is introduced in the second carbon-based material, so that the film layer 12 on the outer side of the negative electrode plate 1 also possesses a relatively high energy density. In addition, the second active material includes a second carbon-based material containing a coating layer, that is, includes primary particles containing a coating layer. On the basis of the primary particle, the electrochemically active sites on the surface of the primary particle containing a coating layer are increased significantly, thereby improving the ion kinetics of the film layer 12 on the outer side of the negative electrode plate 1, that is, the ion kinetics of the surface of the negative electrode plate 1, and in turn, further improving the charge-discharge performance and cycle performance of the battery.

Understandably, the primary particle characterizes a morphological property of the material. That the second carbon-based material includes a primary particle may be that all the second carbon-based material is primary particles, or a part of the second carbon-based material is primary particles and the remaining second carbon-based material does not assume the morphology of primary particles.

Optionally, the coating layer includes amorphous carbon.

Specifically, the amorphous carbon exhibits the advantages of a high conductivity and many electrochemically active sites.

In this embodiment, with the amorphous carbon introduced into the coating layer, the second carbon-based material is endowed with a high electrical conductivity, and the number of electrochemically active sites on the surface of the second carbon-based material is increased. In this way, the ion kinetics of the film layer 12 on the outer side of the negative electrode plate 1 is improved, and in turn, the charge-discharge performance and cycle performance of the battery are improved.

Optionally, the second carbon-based material satisfies at least one of the following conditions (1) to (3):

(1) a specific surface area of the second carbon-based material is $SSA_2$, 1.0 m²/g $<$ $SSA_2 \leq$ 3.0 m²/g, and optionally, 1.3 m²/g $\leq SSA_2 \leq$ 2.0 m²/g;

(2) a volume median diameter of the second carbon-based material is $Dv50_2$, 6.0 $\mu$m $\leq Dv50_2 \leq$ 18.0 $\mu$m, and optionally, 8.0 $\mu$m $\leq Dv50_2 \leq$ 15.0 $\mu$m; or

(3) a gravimetric specific capacity of the second carbon-based material is $C_{m2}$, 345 mAh/g $<$ $C_{m2} \leq$ 360 mAh/g, and optionally, 348 mAh/g $\leq C_{m2} \leq$ 358 mAh/g.

Specifically, $SSA_2$ may be 1.0 m²/g, 1.2 m²/g, 1.3 m²/g, 1.4 m²/g, 1.5 m²/g, 1.6 m²/g, 1.7 m²/g, 1.8 m²/g, 1.9 m²/g, 2.0 m²/g, 2.2 m²/g, 2.4 m²/g, 2.6 m²/g, 2.8 m²/g, 3.0 m²/g, or a value falling within a range formed by any two thereof.

$Dv50_2$ may be 6 $\mu$m, 8 $\mu$m, 10 $\mu$m, 12 $\mu$m, 14 $\mu$m, 15 $\mu$m, 16 $\mu$m, 18 $\mu$m, or a value falling within a range formed by any two thereof.

$C_{m2}$ may be 345 mAh/g, 346 mAh/g, 347 mAh/g, 348 mAh/g, 349 mAh/g, 350 mAh/g, 352 mAh/g, 354 mAh/g, 356 mAh/g, 358 mAh/g, 360 mAh/g, or a value falling within a range formed by any two thereof.

Optionally, the powder compaction density pi of the first active material under a pressure of 50000 N satisfies: 1.70 g/cc $\leq$ pi $\leq$ 2.05 g/cc, and optionally, 1.80 g/cc $\leq$ pi $\leq$ 2.05 g/cc.

Specifically, pi may be 1.70 g/cc, 1.72 g/cc, 1.74 g/cc, 1.76 g/cc, 1.80 g/cc, 1.82 g/cc, 1.84 g/cc, 1.86 g/cc, 1.88 g/cc, 2.00 g/cc, 2.02 g/cc, 2.04 g/cc, 2.05 g/cc, or a value falling within a range formed by any two thereof.

In this embodiment, by controlling the powder compaction density pi of the first active material to fall within an appropriate range, on the one hand, the first part 12a of the film layer 12 is endowed with a relatively high powder compaction density, thereby increasing the contribution of the first part 12a to the energy density of the negative electrode plate 1. On the other hand, the powder compaction density of the first part 12a is controlled not to exceed a threshold, thereby reducing the possibility of damaging the negative current collector.

Optionally, the powder compaction density pi-i of the first carbon-based material under a pressure of 50000 N satisfies: 1.80 g/cc $\leq$ pi-i $\leq$ 2.05 g/cc, and optionally, 1.90 g/cc $\leq$ pi-i $\leq$ 2.00 g/cc.

Specifically, pi-i may be 1.80 g/cc, 1.85 g/cc, 1.90 g/cc, 1.95 g/cc, 2.00 g/cc, 2.05 g/cc, or a value falling within a range formed by any two thereof.

In this embodiment, the powder compaction density pi of the first active material is increased by controlling the powder compaction density pi-i of the first carbon-based material to fall within an appropriate range, thereby increasing the powder compaction density of the first part 12a of the film layer 12, and reducing the possibility of damaging the negative current collector while endowing the battery with a high energy density.

Optionally, the first carbon-based material includes micro-oxidized artificial graphite.

Specifically, compared with ordinary artificial graphite, the micro-oxidized artificial graphite exhibits the advantages of a large particle size, a high degree of graphitization, a high gravimetric capacity, and a high powder compaction density, and, by serving as the first carbon-based material or a part of the first carbon-based material, can contribute a high energy density to the negative electrode plate 1. At the same time, the adhesion between the particles of the micro-oxidized artificial graphite is stronger. In this way, the cohesive force of the film layer 12 on the inner side of the negative electrode plate 1 is relatively strong, and the degree of expansion is low during cycling of the battery, thereby improving the cycle performance and service life of the battery.

Optionally, the first carbon-based material includes a secondary particle.

Specifically, due to the formation cause and characteristics of the secondary particle, the secondary particle can expose more active sites during electrochemical reactions, thereby improving the ion kinetics of the battery.

In this embodiment, by introducing the secondary particle into the first carbon-based material, the active sites of the first carbon-based material in electrochemical reactions can be increased, thereby increasing the active sites of the first active material, and in turn, also imparting good ion kinetics to the film layer 12 on the inner side, away from the electrolyte solution, of the negative electrode plate 1, and further improving the charge-discharge performance of the battery.

Understandably, the secondary particle characterizes a morphological property of the material. That the first carbon-based material includes a secondary particle may be that all the first carbon-based material assumes the morphology of secondary particles, or a part of the first carbon-based material assumes the morphology of secondary particles.

In one example, that the first carbon-based material is micro-oxidized artificial graphite may be that all the micro-oxidized artificial graphite is secondary particles, or may be that just a part of the micro-oxidized artificial graphite is secondary particles and the remaining micro-oxidized artificial graphite does not assume the morphology of secondary particles.

In another example, that the first carbon-based material includes micro-oxidized artificial graphite and conventional artificial graphite may be: the micro-oxidized artificial graphite is secondary particles, and the conventional artificial graphite does not assume the morphology of secondary particles; or, the artificial graphite is secondary particles, and the micro-oxidized artificial graphite does not assume the morphology of secondary particles; or, both the micro-oxidized artificial graphite and the conventional artificial graphite are secondary particles; or, a part of the micro-oxidized artificial graphite and a part of the conventional artificial graphite are secondary particles, and the remaining micro-oxidized artificial graphite and the remaining conventional artificial graphite do not assume the morphology of secondary particles.

Optionally, in the first carbon-based material, the number percentage n of the secondary particles satisfies: $70\% \leq n \leq 90\%$.

Specifically, n may be 70%, 75%, 80%, 85%, 90%, or a value falling within a range formed by any two thereof.

Optionally, the first carbon-based material satisfies at least one of the following conditions (4) to (6):

(4) a specific surface area of the first carbon-based material is SSAi, $1.6 \text{ m}^2/\text{g} \leq SSA_1 \leq 3.5 \text{ m}^2/\text{g}$, and optionally, $1.8 \text{ m}^2/\text{g} \leq SSA_1 \leq 2.8 \text{ m}^2/\text{g}$;

(5) a volume median diameter of the first carbon-based material is Dv50i, $10.0 \text{ }\mu\text{m} \leq Dv50_1 \leq 30.0 \text{ }\mu\text{m}$, and optionally, $13.0 \text{ }\mu\text{m} \leq Dv50_1 \leq 25.0 \text{ }\mu\text{m}$; or

(6) a gravimetric specific capacity of the first carbon-based material is $C_{m1}$, $350 \text{ mAh/g} \leq C_{m1} \leq 365 \text{ mAh/g}$, and optionally, $355 \text{ mAh/g} \leq C_{m1} \leq 362 \text{ mAh/g}$.

Specifically, $SSA_1$ may be $1.6 \text{ m}^2/\text{g}$, $1.7 \text{ m}^2/\text{g}$, $1.8 \text{ m}^2/\text{g}$, $1.9 \text{ m}^2/\text{g}$, $2.0 \text{ m}^2/\text{g}$, $2.1 \text{ m}^2/\text{g}$, $2.2 \text{ m}^2/\text{g}$, $2.3 \text{ m}^2/\text{g}$, $2.4 \text{ m}^2/\text{g}$, $2.5 \text{ m}^2/\text{g}$, $2.6 \text{ m}^2/\text{g}$, $2.7 \text{ m}^2/\text{g}$, $2.8 \text{ m}^2/\text{g}$, $2.9 \text{ m}^2/\text{g}$, $3.0 \text{ m}^2/\text{g}$, $3.1 \text{ m}^2/\text{g}$, $3.2 \text{ m}^2/\text{g}$, $3.3 \text{ m}^2/\text{g}$, $3.4 \text{ m}^2/\text{g}$, $3.5 \text{ m}^2/\text{g}$, or a value falling within a range formed by any two thereof.

$Dv50_1$ may be 10 $\mu$m, 12 $\mu$m, 13 $\mu$m, 14 $\mu$m, 16 $\mu$m, 18 $\mu$m, 20 $\mu$m, 22 $\mu$m, 24 $\mu$m, 25 $\mu$m, 26 $\mu$m, 28 $\mu$m, 30 $\mu$m, or a value falling within a range formed by any two thereof.

$C_{m1}$ may be 350 mAh/g, 352 mAh/g, 354 mAh/g, 355 mAh/g, 356 mAh/g, 358 mAh/g, 360 mAh/g, 362 mAh/g, 364 mAh/g, 365 mAh /g, or a value falling within a range formed by any two thereof.

Optionally, the first active material further includes natural graphite.

The natural graphite possesses a higher gravimetric capacity than artificial graphite. In this embodiment, the natural graphite introduced into the first active material increases the gravimetric capacity of the first active material. In this way, the energy density of the film layer 12 on the inner layer of the negative electrode plate 1 is further increased, and in turn, the energy density of the battery is further increased.

Optionally, a ratio of a mass $m_2$ of the natural graphite to a mass mi of the first active material satisfies: $0\% < m_2/m_1 \leq 50\%$.

Specifically, the $m_2/m_1$ ratio may be 1%, 5%, 10%, 15%, 20%, 25%, 30%, 35%, 40%, 45%, 50%, or a value falling within a range formed by any two thereof.

Understandably, in a case that the first active material contains no natural graphite, the $m_2/m_1$ ratio may be 0.

Optionally, as shown in FIG. 1, a ratio of a thickness hi of the first part 12a to a thickness h of the film layer 12 satisfies: $40\% \leq h_1/h \leq 60\%$.

Specifically, the hi/h ratio may be 40%, 42%, 44%, 46%, 48%, 50%, 52%, 54%, 56%, 58%, 60%, or a value falling within a range formed by any two thereof.

Optionally, as shown in FIG. 1, a ratio of a thickness $h_2$ of the second part 12b to a thickness h of the film layer 12 satisfies: $40\% \leq h_2/h \leq 60\%$.

Specifically, the $h_2/h$ ratio may be 40%, 42%, 44%, 46%, 48%, 50%, 52%, 54%, 56%, 58%, 60%, or a value falling within a range formed by any two thereof.

In this embodiment, by controlling the percentage of the thickness of the first part 12a and the thickness of the second part 12b of the film layer 12 in the thickness of the film layer 12, the energy density of the negative electrode plate 1 can be flexibly adjusted according to the needs of different batteries, so that the negative electrode plate is adaptable to a wider range of batteries of different models.

In some embodiments, the negative electrode plate 1 may be prepared by the following method: using the above constituents of the negative electrode plate to form a negative electrode slurry. For example, dispersing the first active material, a conductive agent, a binder, and any other constituents into a solvent (such as N-methyl-pyrrolidone) to form a first slurry. Dispersing the second active material, a conductive agent, a binder, and any other constituents into a solvent (such as N-methyl-pyrrolidone) to form a second slurry. Subsequently, applying the first slurry and the second slurry onto a negative current collector, and performing steps such as oven-drying and cold-pressing to obtain a negative electrode plate 1.

**[Positive electrode plate]**

The positive electrode plate includes a positive current collector and a positive electrode film layer that overlays at least one surface of the positive current collector. The positive electrode film layer includes a positive active material according to the first aspect of this application.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}CO_{1/3}Mn_{1/3}O_2$ (briefly referred to as NCM333), $LiNi_{0.5}Co_{0.2}Mn_{0.3}O_2$ (briefly referred to as NCM523), $LiNi_{0.5}Co_{0.25}Mn_{0.25}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811), lithium nickel cobalt aluminum oxide (such as $LiNi_{0.85}Co_{0.15}Al_{0.05}O_2$), or a modified compound thereof. Examples of the olivine-structured lithium-containing phosphate may include, but without being limited to, at least one of lithium iron phosphate (such as $LiFePO_4$ (briefly referred to as LFP)), a composite of lithium iron phosphate and carbon, lithium manganese phosphate (such as $LiMnPO_4$), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

**[Electrolyte]**

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

**[Separator]**

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

Next, a method for preparing a negative electrode plate according to an embodiment of this application is described below in detail.

FIG. 2 is a schematic flowchart of a method for preparing a negative electrode plate according to an embodiment of this application. As shown in FIG. 2, the method 200 includes the following steps:

S201. Providing a current collector 11.
S202. Preparing a first part 12a of the film layer 12 on the current collector.
S203. Preparing a second part 12b of the film layer 12 on the first part 12a.

The first part 12a includes a first active material. The first active material includes a first carbon-based material. The second part 12b includes a second active material. The second active material includes a second carbon-based material containing a coating layer. A powder compaction density of the first active material is greater than a powder compaction density of the second active material.

In this embodiment, the film layer 12 of the negative electrode plate 1 is prepared in the form of a first part 12a and a second part 12b. The first part 12a includes a first active material of a relatively high powder compaction density, enables the negative electrode plate 1 to carry a relatively large amount of active material, and endows the battery with a relatively high energy density. The second part 12b includes a second carbon-based material containing a coating layer, and endows the negative electrode plate 1 with good ion kinetics, thereby improving charge-discharge performance and cycle performance of the battery.

Optionally, in step S202, the preparing a first part 12a of the film layer 12 on the current collector includes:

S2011. Preparing a first active material.
S2012. Preparing a first slurry from the first active material.
S2013. Applying the first slurry onto the current collector 11 to form a first part 12a.

Optionally, in step S2011, the preparing a first active material includes the following substeps:

S2011-1. Preparing artificial graphite.
S2011-2. Putting the artificial graphite into a furnace so that the artificial graphite is micro-oxidized under the following conditions: a temperature of 600 °C to 900 °C, an air flow rate of 1 $m^3$/h to 9 $m^3$/h, and a rotation speed of the furnace tube being 2 r/min to 6 r/min, so as to obtain a first carbon-based material, where the first carbon-based material includes secondary particles.

In this embodiment, the first carbon-based material containing secondary particles can be prepared by the above method, thereby not only increasing the energy density of the battery, but also alleviating the expansion effect of the negative electrode plate during cycling of the battery, and in turn, improving the cycle performance and service life of the battery.
Optionally, in step S2011-1, the preparing artificial graphite includes the following substeps:

S2011-1a. Crushing a raw material, where the raw material includes coke.
S2011-1b. Grading the crushed raw material to obtain a granular product with a volume median diameter falling within a preset range.
S2011-1c. Performing shaping and fine powder removal on the granular product to obtain a first intermediate product.
S2011-1d. Performing heat treatment on the first intermediate product to obtain a second intermediate product.
S2011-1e. Graphitizing the second intermediate product at a temperature of 2800 °C to 3200 °C to obtain artificial graphite.

Optionally, the powder compaction density pi of the first active material under a pressure of 50000 N satisfies: 1.70 g/cc $\leq$ pi $\leq$ 2.05 g/cc, and optionally, 1.80 g/cc $\leq$ pi $\leq$ 2.05 g/cc.
Optionally, the powder compaction density $\rho_2$ of the second active material under a pressure of 50000 N satisfies: 1.50 g/cc $\leq$ $\rho_2$ $\leq$ 2.00 g/cc, and optionally, 1.55 g/cc $\leq$ $\rho_2$ $\leq$ 1.95 g/cc.
Optionally, the powder compaction density pi of the first carbon-based material under a pressure of 50000 N satisfies: 1.80 g/cc $\leq$ pi-i $\leq$ 2.05 g/cc, and optionally, 1.90 g/cc $\leq$ pi-i $\leq$ 2.00 g/cc.
Optionally, in the first carbon-based material, the number percentage n of the secondary particles satisfies: 70% $\leq$ n $\leq$ 90%.
Optionally, the first carbon-based material satisfies at least one of the following conditions (4) to (6):

(4) a specific surface area of the first carbon-based material is SSAi, 1.6 $m^2$/g $\leq$ $SSA_1$ $\leq$ 3.5 $m^2$/g, and optionally, 1.8 $m^2$/g $\leq$ $SSA_1$ $\leq$ 2.8 $m^2$/g;
(5) a volume median diameter of the first carbon-based material is Dv50i, 10.0 $\mu$m $\leq$ $Dv50_1$ $\leq$ 30.0 $\mu$m, and optionally, 13.0 $\mu$m $\leq$ $Dv50_1$ $\leq$ 25.0 $\mu$m; or
(6) a gravimetric specific capacity of the first carbon-based material is $C_{m1}$, 350 mAh/g $\leq$ $C_{m1}$ $\leq$ 365 mAh/g, and optionally, 355 mAh/g < $C_{m1}$ $\leq$ 362 mAh/g.

Optionally, in step S2011, the preparing a first active material includes the following substeps:
S2011-3. Adding natural graphite into the first carbon-based material.
Optionally, a ratio of a mass $m_2$ of the natural graphite to a mass mi of the first active material satisfies: 0% $\leq$ $m_2/m_1$ $\leq$ 50%.
Optionally, in step S203, the preparing a second part 12b of the film layer 12 on the first part 12a includes the following substeps:

S2031. Preparing a second active material.
S2032. Preparing a second slurry from the second active material.
S2033. Applying the second slurry onto the first part 12a of the film layer 12 to form a second part 12b.

Optionally, in step S2031, the preparing a second active material includes the following substeps:

S2031-1. Preparing a second carbon-based material.
S2031-2. Preparing a coating layer on the outer side of the second carbon-based material to obtain a second carbon-based material containing the coating layer.

Optionally, in step S2031-1, the preparing a second carbon-based material includes the following substeps:

S2031-1a. Crushing a raw material, where the raw material includes coke.
S2031-1b. Grading the crushed raw material to obtain a granular product with a volume median diameter falling within a preset range.
S2031-1c. Performing shaping and fine powder removal on the granular product to obtain a first intermediate product.
S2031-1d. Performing heat treatment on the first intermediate product to obtain a second intermediate product.
S2031-1e. Graphitizing the second intermediate product at a temperature of 2800 °C to 3200 °C to obtain a second carbon-based material, where the second carbon-based material includes primary particles.

In this embodiment, the second carbon-based material prepared by the above method includes primary particles, thereby not only increasing the energy density of the battery, but also improving the charge-discharge performance and cycle performance of the battery.

Optionally, in step S2031-2, the preparing a coating layer on the outer side of the second carbon-based material includes the following substeps:

S2031-2a. Mixing pitch and the second carbon-based material to obtain a third intermediate product.
S2031-2b. Carbonizing the third intermediate product at a temperature of 800 °C to 1400 °C to obtain a second carbon-based material containing a coating layer, where the coating layer includes amorphous carbon.

In this embodiment, the second carbon-based material containing a coating layer is prepared by the above method. The coating layer includes amorphous carbon, thereby improving the ion kinetics of the negative electrode plate 1, and in turn, improving the charge-discharge performance and cycle performance of the battery.

Optionally, the powder compaction density $\rho_{2\text{-}1}$ of the second carbon-based material under a pressure of 50000 N satisfies: 1.60 g/cc $\leq \rho_{2\text{-}1} \leq$ 1.95 g/cc, and optionally, 1.65 g/cc $\leq \rho_{2\text{-}1} \leq$ 1.80 g/cc.

Optionally, the second carbon-based material satisfies at least one of the following conditions (1) to (3):

(1) a specific surface area of the second carbon-based material is $SSA_2$, 1.0 m²/g $<\_$ $SSA_2 \leq$ 3.0 m²/g, and optionally, 1.3 m²/g $\leq SSA_2 \leq$ 2.0 m²/g;
(2) a volume median diameter of the second carbon-based material is $Dv50_2$, 6.0 $\mu$m $\leq Dv50_2 \leq$ 18.0 $\mu$m, and optionally, 8.0 $\mu$m $\leq Dv50_2 \leq$ 15.0 $\mu$m; or
(3) a gravimetric specific capacity of the second carbon-based material is $C_{m2}$, 345 mAh/g $<\_ C_{m2} \leq$ 360 mAh/g, and optionally, 348 mAh/g $< C_{m2} \leq$ 358 mAh/g.

In some embodiments, the positive electrode plate, the negative electrode plate 1, and the separator may be made into an electrode assembly by winding or stacking.

In some embodiments, the battery cell may include an outer package. The outer package may be configured to package the electrode assembly and the electrolyte.

In some embodiments, the outer package of the battery cell may be a hard shell such as a hard plastic shell, an aluminum shell, a steel shell, or the like. Alternatively, the outer package of the battery cell may be a soft package such as a pouch-type soft package. The soft package may be made of plastic such as polypropylene, polybutylene terephthalate, or polybutylene succinate.

The shape of the battery cell is not particularly limited in this application, and may be cylindrical, prismatic or in any other shape. For example, FIG. 3 shows a prismatic battery cell 300 as an example.

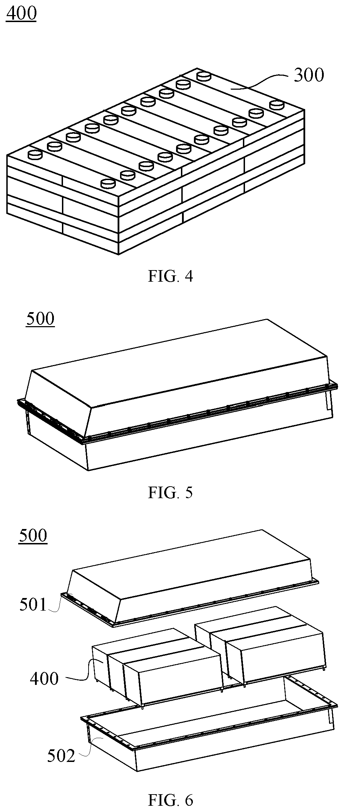

FIG. 4 shows a battery module 400 as an example. Referring to FIG. 4, in the battery module 400, a plurality of battery cells 300 may be arranged sequentially along a length direction of the battery module 400. Alternatively, the secondary batteries may be arranged in any other manner. Further, the plurality of battery cells 300 may be fixed by a fastener.

Optionally, in an embodiment, the battery module 400 may further include a shell that provides an accommodation space. The plurality of battery cells 300 are accommodated in the accommodation space.

Optionally, in an embodiment, the battery module 400 may be assembled to form a battery. The battery may include one or more battery modules 400, and the specific number of battery modules in a battery may be selected by a person skilled in the art depending on practical applications and capacity of the battery.

FIG. 5 and FIG. 6 show a battery 500 as an example. Referring to FIG. 5 and FIG. 6, the battery 500 may include a battery box and a plurality of battery modules 400 disposed in the battery box. The battery box includes an upper box 501 and a lower box 502. The upper box 501 fits the lower box 502 to form a closed space for accommodating the battery modules 400. The plurality of battery modules 400 may be arranged in the battery box in any manner.

Understandably, in some other embodiments, the battery 500 is also referred to as a battery pack. Battery cells 300 may combine into a battery module 400 first, and then one or more battery modules 400 combine into a battery 500. Alternatively, the battery 500 is directly formed by the battery cells 300, without involving the battery module 400 as an intermediate form.

Further, this application further provides an electrical device. The electrical device includes at least one of the battery cell 300, the battery module 400, or the battery 500 according to this application. The battery cell 300, battery module 400, or battery 500 may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery cell 300, battery module 400, or battery 500 may be selected for use in the electrical device as required in practical applications.

As an example, the electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiments 1 to 26 and Comparative Embodiments 1 to 3**

**Embodiment 1**

(1) Preparing a positive electrode plate

Dissolving the lithium iron phosphate as a positive active material, acetylene black as a conductive agent, and polyvinylidene difluoride (PVDF) as a binder in an N-methyl pyrrolidone (NMP) solvent, and mixing well to obtain a positive electrode slurry. Subsequently, coating a positive current collector aluminum foil with the positive electrode slurry evenly, and then performing steps of oven-drying, cold-pressing, and slitting to obtain a positive electrode plate. A percentage of the mass of the positive active material in a sum of the masses of the positive active material, the conductive agent, and the binder is 95% to 98%, and optionally 96% to 97%.

(2) Preparing a negative electrode plate

Dissolving the first active material, acetylene black as a conductive agent, styrene-butadiene rubber (SBR) as a binder, and sodium carboxymethyl cellulose (CMC) as a thickener in a deionized water solvent, and mixing well to obtain a first slurry. Dissolving the second active material, acetylene black as a conductive agent, styrene-butadiene rubber (SBR) as a binder, and sodium carboxymethyl cellulose (CMC) as a thickener in a deionized water solvent, and mixing well to obtain a second slurry. Subsequently, applying the first slurry onto a negative current collector copper foil, and oven-drying the slurry to form a first part 12a of the film layer 12. Further, applying the second slurry onto the first part 12a, and oven-drying the slurry to form a second part 12b of the film layer 12. Further, performing cold-pressing and slitting to obtain a negative electrode plate. The first active material is micro-oxidized artificial graphite, and the second active material is primary particles containing a coating layer.

In Embodiment 1, the micro-oxidized artificial graphite is the first carbon-based material, that is, the first active material. The powder compaction density $p_{i\text{-}i}$ of the first carbon-based material is 1.95 g/cc. The powder compaction density $p_i$ of the first active material is equal to $p_{i\text{-}i}$, and is also 1.95 g/cc. The volume median diameter $Dv50_1$ of the first carbon-based material is 18 $\mu$m. The gravimetric specific capacity $C_{m1}$ of the first carbon-based material is 360 mAh/g. The number percentage of the secondary particles in the first carbon-based material, denoted as $mz/mi$, is 80%. The primary particles are the second carbon-based material. The primary particles containing a coating layer are the second active material. The powder compaction density $\rho_2$ of the second active material is 1.7 g/cc. The powder compaction density $\rho_{2\text{-}1}$ of the second carbon-based material is 1.7 g/cc. The volume median diameter $Dv50_2$ of the second carbon-based material is 10 $\mu$m. The gravimetric specific capacity $C_{m2}$ of the second carbon-based material is 350 mAh/g.

Understandably, the powder compaction density mentioned above is the powder compaction density measured under a pressure of 50000 N. For a material with a volume median diameter falling within the above range, the corresponding specific surface area can be measured by a gas adsorption method, the details of which are omitted here.

3. Assembling a battery cell

Stacking the positive electrode plate, the separator, and the negative electrode plate in sequence so that the separator is located between the positive electrode plate and the negative electrode plate to isolate the positive electrode plate from the negative electrode plate; and then winding the stacked components to obtain an electrode assembly; placing the electrode assembly into a housing, drying the housed electrode assembly, and then injecting an electrolyte solution that contains a 11 wt% $LiPF_6$ lithium salt into the electrode assembly; and performing steps such as chemical formation and static standing to obtain a battery cell 300.

**Embodiment 2**

In contrast to Embodiment 1, the first active material in the negative electrode plate in Embodiment 2 further includes natural graphite, a mass ratio between the natural graphite and the first active material, denoted as $m_2/m_1$, is 50%, the powder compaction density pi of the first active material is 1.98 g/cc, and the powder compaction density pi-i of the first carbon-based material (micro-oxidized natural graphite) is 1.95 g/cc.

**Embodiment 3**

Embodiment 3 is identical to Embodiment 1 except that the powder compaction density of the first active material in the negative electrode plate, that is, pi in Embodiment 3, is 1.8 g/cc.

**Embodiment 4**

Embodiment 4 is identical to Embodiment 1 except that the powder compaction density of the first active material in the negative electrode plate, that is, pi in Embodiment 4, is 2.05 g/cc.

**Embodiment 5**

Embodiment 5 is identical to Embodiment 1 except that the volume median diameter of the first carbon-based material in the negative electrode plate, that is, $Dv50_1$ in Embodiment 5, is 13 $\mu$m.

**Embodiment 6**

Embodiment 6 is identical to Embodiment 1 except that the volume median diameter of the first carbon-based material in the negative electrode plate, that is, $Dv50_1$ in Embodiment 6, is 25 $\mu$m.

**Embodiment 7**

Embodiment 7 is identical to Embodiment 1 except that the volume median diameter of the first carbon-based material in the negative electrode plate, that is, Dv50i, is 8 $\mu$m.

**Embodiment 8**

Embodiment 8 is identical to Embodiment 1 except that the volume median diameter of the first carbon-based material in the negative electrode plate, that is, Dv50i, is 27 $\mu$m.

**Embodiment 9**

Embodiment 9 is identical to Embodiment 1 except that the gravimetric capacity of the first carbon-based material in the negative electrode plate, that is, $C_{m1}$, is 355 mAh/g.

**Embodiment 10**

Embodiment 10 is identical to Embodiment 1 except that the gravimetric capacity of the first carbon-based material in the negative electrode plate, that is, $C_{m1}$, is 362 mAh/g.

**Embodiment 11**

Embodiment 11 is identical to Embodiment 1 except that the gravimetric capacity of the first carbon-based material in the negative electrode plate, that is, $C_{m1}$, is 345 mAh/g.

**Embodiment 12**

Embodiment 12 is identical to Embodiment 1 except that the gravimetric capacity of the first carbon-based material in the negative electrode plate, that is, $C_{m1}$, is 365 mAh/g.

**Embodiment 13**

Embodiment 13 is identical to Embodiment 1 except that the number percentage of the secondary particles in the first carbon-based material based on the total number of particles of the first carbon-based material, that is, $m_2/m_1$, is 70%.

**Embodiment 14**

Embodiment 14 is identical to Embodiment 1 except that the number percentage of the secondary particles in the first carbon-based material based on the total number of particles of the first carbon-based material, that is, $m_2/m_1$, is 90%.

**Embodiment 15**

Embodiment 15 is identical to Embodiment 1 except that the number percentage of the secondary particles in the first carbon-based material in the negative electrode plate, that is, $m_2/m_1$, is 96%.

**Embodiment 16**

In contrast to Embodiment 1, the second active material of the negative electrode plate in Embodiment 16 includes primary particles containing a coating layer and secondary particles containing a coating layer. In Embodiment 16, the primary particles containing a coating layer are the second carbon-based material, the powder compaction density $\rho_{2-1}$ of the second carbon-based material is 1.70 g/cc, and the powder compaction density $\rho_2$ of the second active material is 1.71 g/cc.

**Embodiment 17**

Embodiment 17 is identical to Embodiment 1 except that the powder compaction density, that is, $\rho_2$, of the second active material in the negative electrode plate is 1.65 g/cc.

**Embodiment 18**

Embodiment 18 is identical to Embodiment 1 except that the powder compaction density, that is, $\rho_2$, of the second active material in the negative electrode plate is 1.8 g/cc.

**Embodiment 19**

In contrast to Embodiment 1, the powder compaction density $\rho_2$ of the second active material in the negative electrode plate in Embodiment 19 is 1.55 g/cc.

**Embodiment 20**

Embodiment 20 is identical to Embodiment 1 except that the volume median diameter of the second carbon-based material in the negative electrode plate, that is, $Dv50_2$, is 8 $\mu$m.

**Embodiment 21**

Embodiment 21 is identical to Embodiment 1 except that the volume median diameter of the second carbon-based material in the negative electrode plate, that is, $Dv50_2$, is 15 $\mu$m.

**Embodiment 22**

Embodiment 22 is identical to Embodiment 1 except that the volume median diameter of the second carbon-based material in the negative electrode plate, that is, $Dv50_2$, is 5 $\mu$m.

**Embodiment 23**

Embodiment 23 is identical to Embodiment 1 except that the gravimetric capacity of the second carbon-based material in the negative electrode plate, that is, $C_{m2}$, is 348 mAh/g.

**Embodiment 24**

Embodiment 24 is identical to Embodiment 1 except that the gravimetric capacity of the second carbon-based material in the negative electrode plate, that is, $C_{m2}$, is 358 mAh/g.

**Embodiment 25**

Embodiment 25 is identical to Embodiment 1 except that the gravimetric capacity of the second carbon-based material in the negative electrode plate, that is, $C_{m2}$, is 343 mAh/g.

**Embodiment 26**

Embodiment 25 is identical to Embodiment 1 except that the gravimetric capacity of the second carbon-based material in the negative electrode plate, that is, $C_{m2}$, is 362 mAh/g.

**Comparative Embodiment 1**

In contrast to Embodiment 1, the second active material in the negative electrode plate in Comparative Embodiment 1 is primary particles containing no coating layer.

**Comparative Embodiment 2**

In contrast to Embodiment 1, the powder compaction density pi of the first active material in the negative electrode plate in Comparative Embodiment 2 is 1.60 g/cc.

**Comparative Embodiment 3**

In contrast to Embodiment 1, in the negative electrode plate in Comparative Embodiment 3, the powder compaction density $\rho_2$ of the second active material in the negative electrode plate in Comparative Embodiment 3 is 2.00 g/cc.

The product parameters in each embodiment and each comparative embodiment are shown in Table 1.

**Table 1 Product parameters in Embodiments 1 to 17 and Comparative Embodiments 1 to 16**

| | First active material | $\rho_1$ (g/cc) | $\rho_{1\text{-}1}$ (g/cc) | $D_v50_1$ (μm) | $C_{m1}$ (mAh/g) | n (%) | $m_2/m_1$ (%) | Second active material | $\rho_2$ (g/cc) | $P2\text{-}1$ (g/cc) | $D_v50_2$ (μm) | $C_{m2}$ (mAh/g) |
|---|---|---|---|---|---|---|---|---|---|---|---|---|
| Embodiment 1 | Micro-oxidized AG | 1.95 | 1.95 | 18 | 360 | 80 | 0 | Primary particle | 1.7 | 1.7 | 10 | 350 |
| Embodiment 2 | Micro-oxidized AG+NG | 1.98 | 1.95 | 18 | 360 | 80 | 50 | Primary particle | 1.7 | 1.7 | 10 | 350 |
| Embodiment 3 | Micro-oxidized AG | 1.8 | 1.8 | 18 | 360 | 80 | 0 | Primary particle | 1.7 | 1.7 | 10 | 350 |
| Embodiment 4 | Micro-oxidized AG | 2.05 | 2.05 | 18 | 360 | 80 | 0 | Primary particle | 1.7 | 1.7 | 10 | 350 |
| Embodiment 5 | Micro-oxidized AG | 1.95 | 1.95 | 13 | 360 | 80 | 0 | Primary particle | 1.7 | 1.7 | 10 | 350 |
| Embodiment 6 | Micro-oxidized AG | 1.95 | 1.95 | 25 | 360 | 80 | 0 | Primary particle | 1.7 | 1.7 | 10 | 350 |
| Embodiment 7 | Micro-oxidized AG | 1.95 | 1.95 | 8 | 360 | 80 | 0 | Primary particle | 1.7 | 1.7 | 10 | 350 |
| Embodiment 8 | Micro-oxidized AG | 1.95 | 1.95 | 27 | 360 | 80 | 0 | Primary particle | 1.7 | 1.7 | 10 | 350 |
| Embodiment 9 | Micro-oxidized AG | 1.95 | 1.95 | 18 | 355 | 80 | 0 | Primary particle | 1.7 | 1.7 | 10 | 350 |
| Embodiment 10 | Micro-oxidized AG | 1.95 | 1.95 | 18 | 362 | 80 | 0 | Primary particle | 1.7 | 1.7 | 10 | 350 |

(continued)

| | First active material | $\rho_1$ (g/cc) | $\rho_{1\text{-}1}$ (g/cc) | $D_v50_1$ (μm) | $C_{m1}$ (mAh/g) | n (%) | $m_2/m_1$ (%) | Second active material | $\rho_2$ (g/cc) | P2-1 (g/cc) | $D_v50_2$ (μm) | $C_{m2}$ (mAh/g) |
|---|---|---|---|---|---|---|---|---|---|---|---|---|
| Embodiment 11 | Micro-oxidized AG | 1.95 | 1.95 | 18 | 345 | 80 | 0 | Primary particle | 1.7 | 1.7 | 10 | 350 |
| Embodiment 12 | Micro-oxidized AG | 1.95 | 1.95 | 18 | 365 | 80 | 0 | Primary particle | 1.7 | 1.7 | 10 | 350 |
| Embodiment 13 | Micro-oxidized AG | 1.95 | 1.95 | 18 | 360 | 70 | 0 | Primary particle | 1.7 | 1.7 | 10 | 350 |
| Embodiment 14 | Micro-oxidized AG | 1.95 | 1.95 | 18 | 360 | 90 | 0 | Primary particle | 1.7 | 1.7 | 10 | 350 |
| Embodiment 15 | Micro-oxidized AG | 1.95 | 1.95 | 18 | 360 | 96 | 0 | Primary particle | 1.7 | 1.7 | 10 | 350 |
| Embodiment 16 | Micro-oxidized AG | 1.95 | 1.95 | 18 | 360 | 80 | 0 | Primary particle + secondary particle | 1.71 | 1.7 | 10 | 350 |
| Embodiment 17 | Micro-oxidized AG | 1.95 | 1.95 | 18 | 360 | 80 | 0 | Primary particle | 1.65 | 1.65 | 10 | 350 |
| Embodiment 18 | Micro-oxidized AG | 1.95 | 1.95 | 18 | 360 | 80 | 0 | Primary particle | 1.8 | 1.8 | 10 | 350 |
| Embodiment 19 | Micro-oxidized AG | 1.95 | 1.95 | 18 | 360 | 80 | 0 | Primary particle | 1.55 | 1.55 | 10 | 350 |
| Embodiment 20 | Micro-oxidized AG | 1.95 | 1.95 | 18 | 360 | 80 | 0 | Primary particle | 1.7 | 1.7 | 8 | 350 |

(continued)

| | First active material | $\rho_1$ (g/cc) | $\rho_{1-1}$ (g/cc) | $D_v50_1$ (μm) | $C_{m1}$ (mAh/g) | n (%) | $m_2/m_1$ (%) | Second active material | $\rho_2$ (g/cc) | P2-1 (g/cc) | $D_v50_2$ (μm) | $C_{m2}$ (mAh/g) |
|---|---|---|---|---|---|---|---|---|---|---|---|---|
| Embodiment 21 | Micro-oxidized AG | 1.95 | 1.95 | 18 | 360 | 80 | 0 | Primary particle | 1.7 | 1.7 | 15 | 350 |
| Embodiment 22 | Micro-oxidized AG | 1.95 | 1.95 | 18 | 360 | 80 | 0 | Primary particle | 1.7 | 1.7 | 5 | 350 |
| Embodiment 23 | Micro-oxidized AG | 1.95 | 1.95 | 18 | 360 | 80 | 0 | Primary particle | 1.7 | 1.7 | 10 | 348 |
| Embodiment 24 | Micro-oxidized AG | 1.95 | 1.95 | 18 | 360 | 80 | 0 | Primary particle | 1.7 | 1.7 | 10 | 358 |
| Embodiment 25 | Micro-oxidized AG | 1.95 | 1.95 | 18 | 360 | 80 | 0 | Primary particle | 1.7 | 1.7 | 10 | 343 |
| Embodiment 26 | Micro-oxidized AG | 1.95 | 1.95 | 18 | 360 | 80 | 0 | Primary particle | 1.7 | 1.7 | 10 | 362 |
| Comparative Embodiment 1 | Micro-oxidized AG | 1.95 | 1.95 | 18 | 360 | 80 | 0 | Primary particle (no coating) | 1.7 | 1.7 | 10 | 350 |
| Comparative Embodiment 2 | Micro-oxidized AG | 1.6 | 1.6 | 18 | 360 | 80 | 0 | Primary particle | 1.7 | 1.7 | 10 | 350 |
| Comparative Embodiment 3 | Micro-oxidized AG | 1.95 | 1.95 | 18 | 360 | 80 | 0 | Primary particle | 2 | 2 | 10 | 350 |

In Table 1, pi represents the powder compaction density of the first active material under a pressure of 50000 N, pi-i represents the powder compaction density of the first carbon-based material under a pressure of 50000 N, and $Dv50_1$ represents the volume median diameter of the first carbon-based material, $C_{m1}$ represents the gravimetric capacity of the first carbon-based material, n represents the number percentage of secondary particles in the first carbon-based material, $m_2/m_1$ represents the ratio of the mass of natural graphite in the first active material to the mass of the first active material, $\rho_2$ represents the powder compaction density of the second active material under a pressure of 50000 N, $\rho_{2-1}$ represents the powder compaction density of the second carbon-based material under a pressure of 50000 N, $Dv50_2$ represents the volume median diameter of the second carbon-based material, $C_{m1}$ represents the gravimetric capacity of the second carbon-based materials, "micro-oxidized AG" represents micro-oxidized artificial graphite, "NG" represents natural graphite, "primary particle" represents a primary particle containing a coating layer, "secondary particle" represents a secondary particle containing a coating layer, and "primary particle (no coating)" represents a primary particle containing no coating layer.

Detailed test results of battery performance in Embodiments 1 to 26 and Comparative Embodiments 1 to 3 are shown in Table 2 and Table 3.

**Table 2 Performance test results of charging time in different embodiments and comparative embodiments**

| | Charging time from 0% to 80% SOC at normal temperature (min) |
|---|---|
| Embodiment 1 | 28.3 |
| Embodiment 2 | 30.2 |
| Embodiment 3 | 36.2 |
| Embodiment 4 | 34.7 |
| Embodiment 5 | 28.1 |
| Embodiment 6 | 28.6 |
| Embodiment 7 | 26.3 |
| Embodiment 8 | 38.2 |
| Embodiment 9 | 28.2 |
| Embodiment 10 | 28.9 |
| Embodiment 11 | 27.3 |
| Embodiment 12 | 37.4 |
| Embodiment 13 | 29.5 |
| Embodiment 14 | 27.8 |
| Embodiment 15 | 28.5 |
| Embodiment 16 | 26.1 |
| Embodiment 17 | 27.2 |
| Embodiment 18 | 33 |
| Embodiment 19 | 33.7 |
| Embodiment 20 | 25.3 |
| Embodiment 21 | 37.2 |
| Embodiment 22 | 21.6 |
| Embodiment 23 | 27.9 |
| Embodiment 24 | 28.8 |
| Embodiment 25 | 27.1 |
| Embodiment 26 | 37.6 |
| Comparative Embodiment 1 | 42 |

(continued)

| | Charging time from 0% to 80% SOC at normal temperature (min) |
|---|---|
| Comparative Embodiment 2 | 44.9 |
| Comparative Embodiment 3 | 49.5 |

**Table 3 Performance test results of number of cycles and full-charge expansion rate in different embodiments**

| | Number of cycles counted when battery capacity fades to 80% at normal temperature | Full-charge expansion rate |
|---|---|---|
| Embodiment 1 | 3892 | 20.3% |
| Embodiment 2 | 3529 | 21.8% |
| Embodiment 3 | 3821 | 22.7% |
| Embodiment 4 | 3813 | 20.1% |
| Embodiment 5 | 3901 | 22.7% |
| Embodiment 6 | 3900 | 19.5% |
| Embodiment 7 | 3699 | 23.3% |
| Embodiment 8 | 3947 | 19.3% |
| Embodiment 9 | 3875 | 19.6% |
| Embodiment 10 | 3677 | 20.1% |
| Embodiment 11 | 3920 | 18.2% |
| Embodiment 12 | 3636 | 20.2% |
| Embodiment 13 | 3796 | 21.9% |
| Embodiment 14 | 3918 | 19.6% |
| Embodiment 15 | 3899 | 20.0% |
| Embodiment 16 | 3803 | 21.1% |
| Embodiment 17 | 3822 | 20.5% |
| Embodiment 18 | 3842 | 20.6% |
| Embodiment 19 | 3243 | 24.6% |
| Embodiment 20 | 3909 | 20.6% |
| Embodiment 21 | 3725 | 19.3% |
| Embodiment 22 | 3388 | 19.0% |
| Embodiment 23 | 3855 | 20.7% |
| Embodiment 24 | 3849 | 20.1% |
| Embodiment 25 | 3939 | 21.0% |
| Embodiment 26 | 3669 | 21.5% |

As can be seen from the performance comparison between Embodiment 1 and Comparative Embodiments 2 and 3, the charging time of the lithium-ion battery in Embodiment 1 is much shorter than that of the lithium-ion batteries in Comparative Embodiments 2 and 3. The powder compaction density of the first active material in Embodiment 1 is greater than the powder compaction density of the second active material, but in Comparative Embodiments 2 and 3, the powder compaction density of the first active material is less than the powder compaction density of the second active material. This indicates that, by controlling the powder compaction density of the first active material to be greater than the powder compaction density of the second active material, the lithium-ion kinetics of the negative electrode plate is improved effectively, and in turn, the charge-discharge performance of the lithium-ion battery is improved.

As can be seen from the performance comparison between each embodiment and Comparative Embodiment 1, the charging time of the lithium-ion batteries in Embodiments 1 to 26 is shorter than that in Comparative Embodiment 1. The second active materials in Embodiments 1 to 26 are primary particles containing a coating layer, but the second active material in Comparative Embodiment 1 is primary particles containing no coating layer. This indicates that, by using the second carbon-based material containing a coating layer, the second active material is endowed with good ion kinetics, battery polarization is alleviated, and the lithium-ion battery is endowed with good charge-discharge performance.

In contrast to Embodiment 1, the first active material in Embodiment 2 includes natural graphite. The performance metrics of the lithium-ion batteries in Embodiment 1 and Embodiment 2 show that the added natural graphite exerts no great impact on the charge-discharge performance, cycle performance, or expansion resistance of the lithium-ion battery, and the natural graphite is typically of a higher gravimetric capacity than artificial graphite. Therefore, by introducing some natural graphite into the first active material, the energy density of the lithium-ion battery can be increased without affecting the performance metrics of the lithium-ion battery.

As can be seen from the performance comparison between Embodiments 3 and 4 and Comparative Embodiment 2, the charging time of the lithium-ion batteries in Embodiments 3 and 4 is also shorter than that in Comparative Embodiment 2. The powder compaction densities of the first active material in Embodiments 3 and 4 are 1.80 g/cc and 2.05 g/cc respectively, that is, fall within the range of 1.70 g/cc to 2.05 g/cc. The powder compaction density of the first active material in Comparative Embodiment 2 is 1.6 g/cc, that is, goes beyond the above range. This indicates that, by controlling the powder compaction density of the first active material to fall within the above range, the kinetics of the lithium-ion battery is improved, and the charging time is saved.

As can be seen from the performance comparison between Embodiments 5, 6, and 8 and Embodiment 7, in Embodiments 5, 6, and 8, the number of cycles is larger than that in Embodiment 7, and the full-charge expansion rate is less than that in Embodiment 7 when the charging time in all such embodiments is shorter than that in the comparative embodiment. The volume median diameters (Dv50i) of the first active material in Embodiments 5, 6, and 8 are 13 $\mu$m, 25 $\mu$m, and 27 $\mu$m, respectively, that is, fall within the range of 10 $\mu$m to 30 $\mu$m. The volume median diameter in Embodiment 7 is 8 $\mu$m, that is goes beyond the above range. Therefore, by controlling the volume median diameter of the first active material to fall within the above range, the cycle performance of the lithium-ion battery is improved, the battery expansion is alleviated, and in turn, the safety performance of the battery is improved.

In contrast to Embodiments 9 and 10, the gravimetric capacities ($C_{m1}$) of the first carbon-based material in Embodiments 11 and 12 is 345 mAh/g and 365 mAh/g respectively, that is, go beyond the range of 350 mAh/g to 365 mAh/g. Although there is little difference between the four embodiments in terms of charge-discharge performance, cycle performance, and expansion resistance, in practical applications, the gravimetric capacity of the material in Embodiment 11 is unduly low, thereby making the energy density of the battery too low to properly meet requirements in practical applications. However, the gravimetric capacity in Embodiment 12 is unduly high, thereby making the preparation of the raw material extremely difficult, and being unfavorable to mass production and application. Therefore, controlling the gravimetric capacity of the first carbon-based material to fall within the above range improves the charge-discharge performance, cycle performance, and expansion resistance of the lithium-ion battery, and facilitates the actual mass production and application of the lithium-ion battery.

In Embodiments 13 to 15, the percentage ($m_2/m_1$) of secondary particles in the first carbon-based material is adjusted. In Embodiment 13, the percentage of secondary particles is 70%; in Embodiment 14, the percentage of secondary particles is 90%; and, in Embodiment 15, the percentage ($m_2/m_1$) of secondary particles in the first carbon-based material is as high as 96%, exceeding the range of 70% to 90%. When the charging time is approximately equal between the three embodiments, the comparison of performance data between Embodiment 13 and Embodiment 14 shows that a higher percentage of the secondary particles leads to a larger number of cycles of the battery and a lower expansion rate. This indicates that the secondary particles introduced in the first carbon-based material improves the ion kinetics of the electrode material and the cycle performance of the lithium-ion battery. Moreover, the secondary particles make adhesion stronger between the secondary particles, increase internal cohesion of the negative electrode plate, and in turn, alleviate the expansion of the battery. As can be seen from the comparison between Embodiment 15, Embodiment 13, and Embodiment 14, the number of cycles and expansion resistance in Embodiment 15 are larger than those in Embodiment 13, but compared to Embodiment 14, the number of cycles is reduced to some extent and the full-charge expansion rate is increased to some extent, indicating that the performance of the lithium-ion battery will not increase indefinitely with the rise of the percentage of the secondary particles in the first carbon-based material. In addition, an excessive percentage of secondary particles increases the difficulty of material processing. In other words, the first carbon-based material in which the percentage of secondary particles is higher than 90% is not easy to prepare. Therefore, by controlling the percentage of secondary particles in the first carbon-based material to fall within the above range, the lithium-ion battery is endowed with good charge-discharge performance and cycle performance, and the expansion of the lithium-ion battery is alleviated.

In Embodiment 16, the second active material includes a secondary particle containing a coating layer. As can be seen, similar to Embodiment 1, by controlling the powder compaction density of the first active material to be greater than the powder compaction density of the second active material, the resulting lithium-ion battery is improved to some extent in terms of charge-discharge performance, cycle performance, and expansion resistance.

In Embodiments 17 to 19, the powder compaction density of the second active material is regulated. The powder compaction densities of the second active material in Embodiment 17 and Embodiment 19 are 1.65 g/cc and 1.80 g/cc respectively, that is, fall within the range of 1.65 g/cc to 1.95 g/cc. The powder compaction density of the second active material in Embodiment 19 is 1.55 g/cc, going beyond the above value range. As can be seen from the performance comparison between Embodiment 19 and Embodiments 17 and 18, although the performance metrics of charge-discharge performance, cycle performance, and expansion resistance of the lithium-ion battery in Embodiment 19 are all improved in contrast to the comparative embodiment, such performance metrics of the lithium-ion battery in Embodiment 19 are inferior to those in Embodiments 17 and 18 in contrast to Embodiments 17 and 18. This indicates that, by controlling the powder compaction density of the second active material to fall within the above range, the lithium-ion battery is endowed with good charge-discharge performance and cycle performance, and the expansion of the lithium-ion battery is alleviated.

In Embodiments 20 to 22, the volume median diameter ($Dv50_2$) of the second carbon-based material is regulated. The volume median diameters of the second carbon-based material in Embodiments 20 and 21 are 8 $\mu$m and 15 $\mu$m respectively, that is, fall within the value range of 6 $\mu$m to 18 $\mu$m. The volume median diameter of the second carbon-based material in Embodiment 22 is 5 $\mu$m, going beyond the above value range. In contrast to the comparative embodiment, the charge-discharge performance, cycle performance, and expansion resistance of the lithium-ion batteries in Embodiments 20 to 22 are all improved to some extent. Although the charging time for charging to a maximum state of charge in Embodiment 22 is the shortest among the above three embodiments, the number of cycles in Embodiment 22 is less than that in Embodiments 20 and 21. In addition, the volume median diameter of the second carbon-based material in Embodiment 22 is unduly small, and makes it difficult to prepare the material. Therefore, by controlling the volume median diameter of the second carbon-based material to fall within the above value range, not only the charge-discharge performance of the lithium-ion battery is improved, but also the cycle performance of the lithium-ion battery is improved.

In Embodiments 23 to 26, the gravimetric capacity ($C_{m2}$) of the second carbon-based material is regulated. The gravimetric capacities in Embodiments 23 to 24 are 348 mAh/g and 358 mAh/g respectively, that is, fall within the value range of 345 mAh/g to 360 mAh/g. However, the gravimetric capacities in Embodiments 25 to 26 are 343 mAh/g and 362 mAh/g respectively, that is, go beyond the above value range. Although there is little difference between the four embodiments in terms of charge-discharge performance, cycle performance, and expansion resistance, in practical applications, the gravimetric capacity of the material in Embodiment 25 is unduly low, thereby making the energy density of the battery too low to properly meet requirements in practical applications. However, the gravimetric capacity in Embodiment 26 is unduly high, thereby making the raw material costly and unaffordable, and being unfavorable to mass production and application. Therefore, controlling the gravimetric capacity of the second carbon-based material to fall within the above range improves the charge-discharge performance, cycle performance, and expansion resistance of the lithium-ion battery, and facilitates the actual mass production and application of the lithium-ion battery.

Next, the test methods of physical parameters and performance parameters mentioned in some embodiments of this application are described below briefly.

1. Method for testing the powder compaction density

The powder compaction density of a material may be tested by a method known in the art. For example, the powder compaction density is tested with reference to the standard GB/T 24533-2009 by the following method by using an electronic pressure tester (such as UTM7305): putting a specified amount of powder specimen onto a special-purpose compaction die, applying different pressures separately so that the thickness values of the powder under different pressures can be read on the tester, and then calculating the compaction densities of the specimen under different pressures.

2. Method for testing the volume-based particle size distribution

The volume-based particle size distribution of a material may be tested by a method known in the art. For example, the particle size distribution may be tested with reference to GB/T 19077-2016/ISO 13320:2009 by using a laser diffractometer: performing instrument commissioning and background measurement, preparing a specimen, and collecting optical signals by using the instrument. Calculating a scattering matrix by using an appropriate optical model, and finally converting the scattered light distribution into a particle size distribution.

3. Method for testing the gravimetric capacity

Mixing PVDF, conductive carbon black (Super P), and an active material at a specified ratio to form a negative electrode slurry, applying the negative electrode slurry onto a copper foil evenly by using a scraper, and then oven-drying and cold-pressing the foil, stamping the foil to form a sheet, and assembling the sheet together with a lithium sheet, a separator, and the like to form a button battery. Performing charge-discharge cycles on the button battery from 0.005 V to 2 V by using a LAND tester, and measuring the corresponding gravimetric capacity of the active material.

4. Method for testing the charging time

Charging the battery at a current of 0.33 C at 25 °C for t minutes until the state of charge reaches 80% SOC, leaving the battery to stand for 30 minutes, and then discharging the battery at a current of 1 C, and leaving the battery to stand for 30 minutes, thereby completing one cycle. Cycling the battery for 20 cycles, and then fully charging the battery, disassembling the battery, and observing whether lithium plating occurs on the negative electrode. If no lithium plating occurs, it indicates that the charging time for charging the battery from 0% SOC to 80% SOC at a normal temperature is t minutes.

5. Method for testing the cycle performance

Assembling a full battery, and performing a cycling test on the full battery by using a LAND tester. Specifically, charging and discharging the battery repeatedly by applying a charge rate of 0.5 C and a discharge rate of 1 C. Counting the number of cycles when the battery capacity fades to 80%, that is, the number of cycles when the capacity of the battery cycled at a normal temperature fades to 80%.

6. Method for testing a full-charge expansion rate

Measuring the thickness $d_2$ of an electrode plate at a room temperature. Assembling the electrode plate to form a battery, and then charging the battery at a current of 0.5 C until the voltage reaches 4.2 V Leaving the battery to stand for 3 minutes, disassembling the battery, and measuring the thickness $d_2$ of the electrode plate at this time. Calculating the full-charge expansion rate as:

$$(d_2 - d_1)/d_1 \times 100\%.$$

7. Method for testing the number percentage of the secondary particles

The number percentage (n) of secondary particles in the first carbon-based material based on the total number of particles in the first carbon-based material may be obtained from a scanning electron microscope image of the material specimen. A specific process is: Counting the number $n_2$ of particles that assume the morphology of secondary particles and the number $n_1$ of all particles in a scanning electron microscope image separately, and then calculating a ratio between the two numbers, expressed as: $n = n_2/n_1$. To improve the accuracy of the ratio, a plurality of scanning electron microscope images of the material may be observed to count the above numbers of particles and obtain a plurality statistic results, and then the number percentage of secondary particles is calculated based on an average value of the plurality of statistical results.

As an example, the scanning electron microscope image may be obtained by the following method:

Weighing out a specified mass (<_ 2 g) of the test-piece material, and affixing the test-piece material onto conductive adhesive tape. Placing the conductive adhesive tape onto a specimen holder, and drying the specimen holder. Feeding the dried specimen holder into a field emission scanning electron microscope (for example, Zeiss Sigma300 scanning electron microscope), and photographing the morphology of the material by using the field emission scanning electron microscope.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**EP 4 462 496 A1**

**Claims**

1. A negative electrode plate, **characterized in that** the negative electrode plate comprises:
   a current collector and a film layer disposed on the current collector, wherein:

   the film layer comprises a first part and a second part disposed along a thickness direction of the film layer, the first part is disposed on the current collector, and the second part is disposed on the first part; and
   the first part comprises a first active material, the second part comprises a second active material, the first active material comprises a first carbon-based material, the second active material comprises a second carbon-based material containing a coating layer, and a powder compaction density of the first active material is greater than a powder compaction density of the second active material.

2. The negative electrode plate according to claim 1, wherein the powder compaction density $\rho_2$ of the second active material under a pressure of 50000 N satisfies: $1.50$ g/cc $\leq \rho_2 \leq 2.00$ g/cc, and optionally, $1.55$ g/cc $\leq \rho_2 \leq 1.95$ g/cc.

3. The negative electrode plate according to claim 1 or 2, wherein a powder compaction density $\rho_{2-1}$ of the second carbon-based material under a pressure of 50000 N satisfies: $1.60$ g/cc $\leq \rho_{2-1} \leq 1.95$ g/cc, and optionally, $1.65$ g/cc $\leq \rho_{2-1} \leq 1.80$ g/cc.

4. The negative electrode plate according to any one of claims 1 to 3, wherein the second carbon-based material comprises a primary particle.

5. The negative electrode plate according to any one of claims 1 to 4, wherein the coating layer comprises amorphous carbon.

6. The negative electrode plate according to any one of claims 1 to 5, wherein the second carbon-based material satisfies at least one of the following conditions (1) to (3):

   (1) a specific surface area of the second carbon-based material is $SSA_2$, satisfying: $1.0$ m$^2$/g $\leq SSA_2 \leq 3.0$ m$^2$/g, and optionally, $1.3$ m$^2$/g $\leq SSA_2 \leq 2.0$ m$^2$/g;
   (2) a volume median diameter of the second carbon-based material is $Dv50_2$, satisfying: $6.0$ $\mu$m $\leq Dv50_2 \leq 18.0$ $\mu$m, and optionally, $8.0$ $\mu$m $\leq Dv50_2 \leq 15.0$ $\mu$m; or
   (3) a gravimetric specific capacity of the second carbon-based material is $C_{m2}$, satisfying: $345$ mAh/g $<\_ C_{m2} \leq 360$ mAh/g, and optionally, $348$ mAh/g $< C_{m2} \leq 358$ mAh/g.

7. The negative electrode plate according to any one of claims 1 to 6, wherein the powder compaction density pi of the first active material under a pressure of 50000 N satisfies: $1.70$ g/cc $\leq \rho_1 \leq 2.05$ g/cc, and optionally, $1.80$ g/cc $<$ pi $\leq 2.05$ g/cc.

8. The negative electrode plate according to any one of claims 1 to 7, wherein the powder compaction density $\rho_{1-1}$ of the first carbon-based material under a pressure of 50000 N satisfies: $1.80$ g/cc $\leq \rho_{1-1} \leq 2.05$ g/cc, and optionally, $1.90$ g/cc $\leq \rho_{1-1} \leq 2.00$ g/cc.

9. The negative electrode plate according to any one of claims 1 to 8, wherein the first carbon-based material comprises micro-oxidized artificial graphite.

10. The negative electrode plate according to any one of claims 1 to 9, wherein the first carbon-based material comprises a secondary particle.

11. The negative electrode plate according to claim 10, wherein, in the first carbon-based material, a number percentage n of the secondary particles satisfies: $70\% \leq n \leq 90\%$.

12. The negative electrode plate according to any one of claims 1 to 11, wherein the first carbon-based material satisfies at least one of the following conditions (4) to (6):

    (4) a specific surface area of the first carbon-based material is SSAi, satisfying: $1.6$ m$^2$/g $\leq SSA_1 \leq 3.5$ m$^2$/g, and optionally, $1.8$ m$^2$/g $\leq SSA_1 \leq 2.8$ m$^2$/g;
    (5) a volume median diameter of the first carbon-based material is Dv50i, satisfying: $10.0$ $\mu$m $\leq Dv50_1 \leq 30.0$

$\mu$m, and optionally, 13.0 $\mu$m $\leq$ Dv50$_1$ $\leq$ 25.0 $\mu$m; or
(6) a gravimetric specific capacity of the first carbon-based material is $C_{m1}$, satisfying:350 mAh/g < $C_{m1}$ $\leq$ 365 mAh/g, and optionally, 355 mAh/g < $C_{m1}$ $\leq$ 362 mAh/g.

13. The negative electrode plate according to any one of claims 1 to 12, wherein the first active material further comprises natural graphite.

14. The negative electrode plate according to claim 13, wherein a ratio of a mass $m_2$ of the natural graphite to a mass mi of the first active material satisfies: 0% < $m_2/m_1$ $\leq$ 50%.

15. The negative electrode plate according to any one of claims 1 to 14, wherein a ratio of a thickness hi of the first part to a thickness h of the film layer satisfies: 40% $\leq$ $h_1/h$ $\leq$ 60%.

16. The negative electrode plate according to any one of claims 1 to 15, wherein a ratio of a thickness $h_2$ of the second part to a thickness h of the film layer satisfies: 40% $\leq$ $h_2/h$ $\leq$ 60 %.

17. A method for preparing a negative electrode plate, **characterized in that** the method comprises:

   providing a current collector;
   preparing a first part of a film layer on the current collector, wherein the first part comprises a first active material, and the first active material comprises a first carbon-based material;
   preparing a second part of the film layer on the first part of the film layer, wherein the second part comprises a second active material, the second active material comprises a second carbon-based material containing a coating layer, and a powder compaction density of the first active material is greater than a powder compaction density of the second active material.

18. A battery cell, wherein the battery cell comprises:

   the negative electrode plate according to any one of claims 1 to 16; or
   a negative electrode plate prepared by the method according to claim 17.

19. A battery, wherein the battery comprises the battery cell according to claim 18.

20. An electrical device, wherein the electrical device comprises the battery cell according to claim 18 and/or the battery according to claim 19.

1

FIG. 1

200

| Provide a current collector | S201 |
| Prepare a first part of a film layer on the current collector | S202 |
| Prepare a second part of the film layer on the first part | S203 |

FIG. 2

300

FIG. 3

400

FIG. 4

500

FIG. 5

500

FIG. 6

## INTERNATIONAL SEARCH REPORT

| International application No. |
| --- |
| **PCT/CN2023/080340** |

| A. | CLASSIFICATION OF SUBJECT MATTER |
| --- | --- |

H01M4/13(2010.01)i;H01M4/139(2010.01)i;H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, CNKI: 负极, 阳极, 层, 二, 两, 碳, 石墨, 包覆, 压实密度, negative, anode, layer, two, second, carbon, graphite, coat, cover, density

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114747042 A (NINGDE CONTEMPORARY AMPEREX TECHNOLOGY CO., LTD.) 12 July 2022 (2022-07-12)<br>description, paragraphs 0006-0129 | 1-20 |
| Y | CN 114335419 A (SVOLT ENERGY TECHNOLOGY CO., LTD.) 12 April 2022 (2022-04-12)<br>description, paragraphs 0005-0035 | 1-20 |
| Y | CN 106898740 A (SHENZHEN KINGRUNNING ENERGY MATERIALS CO., LTD.) 27 June 2017 (2017-06-27)<br>description, paragraphs 0005-0023 | 1-20 |
| Y | CN 106532045 A (NINGDE AMPEREX TECHNOLOGY LTD.) 22 March 2017 (2017-03-22)<br>description, paragraphs 0007-0027 | 1-20 |
| A | CN 114927639 A (SUNWODA ELECTRIC VEHICLE BATTERY CO., LTD.) 19 August 2022 (2022-08-19)<br>entire document | 1-20 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2023** | **23 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080340**

| Patent document cited in search report | | | Publication date (day/month/year) | Patent family member(s) | Publication date (day/month/year) |
|---|---|---|---|---|---|
| CN | 114747042 | A | 12 July 2022 | None | |
| CN | 114335419 | A | 12 April 2022 | None | |
| CN | 106898740 | A | 27 June 2017 | None | |
| CN | 106532045 | A | 22 March 2017 | None | |
| CN | 114927639 | A | 19 August 2022 | None | |

Form PCT/ISA/210 (patent family annex) (July 2022)